# FASCICULE DE BREVET EUROPEEN

(11) **EP 3 667 383 B1**
(45) Date de publication et mention de la délivrance du brevet: **02.07.2025**
(21) Numéro de dépôt: 18211439.7
(22) Date de dépôt: 10.12.2018
(51) Int. Cl.: G02B 7/00, G02B 27/01

(54) **AFFICHEUR TÊTE HAUTE POUR VÉHICULE AUTOMOBILE**
HEAD-UP-DISPLAY FÜR KRAFTFAHRZEUG
HEAD-UP DISPLAY FOR A MOTOR VEHICLE

(43) Date de publication de la demande: 17.06.2020
(73) Titulaire: Valeo Comfort and Driving Assistance, 94000 Créteil (FR)
(72) Inventeur: BLANC, Eric, 94046 Créteil CEDEX (FR); LE-GUYADER, Delphine, 94046 Créteil CEDEX (FR); KULKARNI, Vishal, 74321 Bietigheim-Bissingen (DE); MORGENROTH, Kai Thorsten, 74321 Bietigheim-Bissingen (DE); DELPIERRE, Laurent, 94046 Créteil CEDEX (FR); DARDELIN, Régis, 94046 Créteil CEDEX (FR)
(74) Mandataire: Delplanque, Arnaud

(56) Documents cités:
- DE-A1- 102015 106 708
- FR-A1- 2 843 792
- FR-A1- 3 066 835

## Description

### DOMAINE TECHNIQUE AUQUEL SE RAPPORTE L'INVENTION

La présente invention concerne un dispositif d'affichage d'information lumineuse. Elle concerne plus particulièrement un afficheur tête haute pour véhicule automobile.

### ARRIERE-PLAN TECHNOLOGIQUE

Il est appréciable pour le conducteur d'un véhicule automobile de pouvoir prendre connaissance d'informations relatives au fonctionnement de son véhicule, sans devoir pour cela détourner son regard de la route. Pour répondre à cette attente, il est connu l'utilisation d'afficheurs têtes hautes permettant d'afficher ces informations sous forme d'images virtuelles, à proximité ou au niveau du pare-brise du véhicule, afin que ces informations soient présentes dans le champ de vision du conducteur lorsqu'il est en situation de conduite. La demande de brévet FR3066865A1 divulgue un afficheur tête haute de ce type.

Un afficheur tête haute se compose d'une première partie générant un faisceau lumineux comportant une information et d'une seconde partie permettant d'afficher l'information sous la forme d'une image virtuelle. Plus précisément, l'information est transmise au faisceau lumineux au niveau d'un écran rétroéclairé par une source de lumière générant le faisceau lumineux. La transmittance de l'écran varie localement et de façon contrôlée au cours du temps, afin de coder le faisceau lumineux en une information souhaitée. Il est commun d'interposer un conduit optique entre la source de lumière et l'écran, pour permettre un éclairement plus intense et plus homogène de l'écran. Le conduit optique forme alors un espace clos dans lequel s'accumule la chaleur émise par la source de lumière et la chaleur générée par l'écran lors de leur fonctionnement. Or, au-delà d'une température critique, le fonctionnement de l'écran est altéré de façon plus ou moins irréversible.

Pour éviter cela, il est connu l'emploi de radiateurs thermiques pour dissiper plus rapidement la chaleur de l'écran dans son environnement et ainsi limiter son échauffement. La partie émissive des radiateurs thermiques est habituellement positionnée entre la source de lumière et l'écran. Néanmoins, cette solution présente l'inconvénient de placer la partie émissive des radiateurs thermiques entre les deux principales sources de chaleur de l'afficheur tête haute, et donc de limiter les performances des radiateurs thermiques. Cette solution présente également l'inconvénient d'encombrer l'espace autour du conduit optique, ce qui engendre des contraintes supplémentaires d'intégration de l'afficheur tête haute.

La présente invention vise à résoudre ces problématiques en proposant un afficheur tête haute pour véhicule automobile, qui soit à la fois moins encombrant tout en permettant un meilleur refroidissement de son écran.

### OBJET DE L'INVENTION

Dans ce contexte, la présente invention propose un afficheur tête haute pour véhicule automobile, comprenant un écran composé d'une matrice constituée d'éléments dont la transmittance varie de façon contrôlée dans le temps, entre une face avant et une face arrière de l'écran, une source de lumière éclairant la face avant de l'écran avec un faisceau lumineux, et un conduit optique arrière agencé en vis-à-vis de la face arrière de l'écran afin qu'un faisceau lumineux émis par l'écran passe à travers le conduit optique arrière.

L'invention est remarquable en ce que l'afficheur tête haute comprend un collecteur de chaleur reliant thermiquement l'écran au conduit optique arrière, de sorte à favoriser un transfert de chaleur de l'écran vers le conduit optique arrière, et en ce que le collecteur de chaleur comprend un élément intermédiaire interposé entre la face arrière de l'écran et le conduit optique arrière, l'élément intermédiaire étant relié thermiquement à un radiateur thermique s'étendant le long du conduit optique arrière.

Ainsi, de façon avantageuse, la chaleur émise par l'écran est préférentiellement dissipée au niveau du conduit optique arrière. De ce fait, on évite une accumulation excessive de chaleur dans le conduit optique avant, on limite donc le risque de détérioration de la source de lumière et de l'écran dû à un échauffement excessif de leurs composants. Selon un autre avantage, la chaleur de l'écran est dissipée dans l'environnement par l'intermédiaire du conduit optique arrière. Autrement dit, pour refroidir l'écran, l'invention favorise l'utilisation du conduit optique arrière comme dissipateur thermique. Cette solution permet avantageusement de ne pas encombrer l'espace autour du conduit optique avant avec par exemple un radiateur thermique dédié à l'écran. Un afficheur tête haute selon l'invention est donc plus compact et plus aisément intégrable dans un véhicule automobile, comparé à l'état de la technique décrit ci-dessus. Selon un autre avantage, l'utilisation du conduit optique arrière comme dissipateur thermique, permet un refroidissement plus efficace de l'écran du fait que l'environnement du conduit optique arrière est nettement moins chaud que l'environnement du conduit optique avant, ce dernier étant présent entre les deux principales sources de chaleur de l'afficheur tête haute.

D'autres caractéristiques non limitatives et avantageuses du dispositif conforme à l'invention sont les suivantes :
- l'afficheur tête-haute comprend un conduit optique avant interposé entre la source de lumière et la face avant de l'écran ;
- le collecteur de chaleur est agencé de sorte à permettre une plus grande transmission de la chaleur produite par l'écran au niveau du conduit optique arrière qu'au conduit optique avant ;
- le collecteur de chaleur est agencé de sorte à permettre la transmission de plus de 50%, de préférence de plus de 70% de la chaleur produite par l'écran au conduit optique arrière ;
- le collecteur de chaleur a une conductivité thermique égale ou supérieure à la conductivité thermique de l'écran ;
- le collecteur de chaleur a une conductivité thermique égale ou supérieure à la conductivité thermique du conduit optique avant ;
- le collecteur de chaleur a une conductivité thermique égale ou supérieure à 0,5 W.m⁻¹.K⁻¹ (et de préférence supérieure à 5 W.m⁻¹.K⁻¹) ;
- l'écran comporte sur sa face arrière, un premier cadre métallique entourant la matrice, le collecteur de chaleur reliant le premier cadre métallique au conduit optique arrière ;
- le collecteur de chaleur comprend un deuxième cadre métallique entourant la matrice au niveau de la face avant de l'écran, le deuxième cadre métallique comprenant au moins un bord latéral lié thermiquement avec le conduit optique arrière ;
- au moins un bord latéral du deuxième cadre métallique s'étend le long du conduit optique arrière ;
- au moins un bord latéral du deuxième cadre métallique est situé à l'extérieur du conduit optique arrière ;
- l'écran comporte sur sa face arrière, un cadre non métallique (mais conducteur thermiquement), entourant par exemple la matrice ;
- en variante, l'écran pourrait ne comporter aucun cadre (ni sur sa face avant, ni sur sa face arrière) ;
- une couche thermiquement isolante est interposée entre le cadre non métallique et le conduit optique arrière ;
- le collecteur de chaleur est couplé thermiquement avec des moyens de refroidissement actifs, de préférence avec des moyens favorisant la circulation de l'air ambiant au niveau du conduit optique arrière et/ou un moyen mettant en œuvre un effet thermoélectrique de type effet Peltier ;
- les moyens de refroidissement actifs sont majoritairement présents au niveau du conduit optique arrière ;
- le conduit optique arrière et/ou le conduit optique avant comportent des moyens de refroidissement passifs ou actifs, favorisant une meilleure diffusion de la chaleur vers l'environnement extérieur ;
- le conduit optique arrière et/ou le conduit optique avant comportent au moins une ailette de refroidissement et/ou un passage favorisant la circulation de l'air de l'intérieur vers l'extérieur du ou des conduits optiques ;
- l'afficheur tête haute comprend un dispositif de projection du faisceau lumineux en direction d'une lame partiellement transparente (cette lame partiellement transparente pouvant être une lame dédiée située entre le conducteur et le pare-brise du véhicule, cette lame partiellement transparente pouvant être en variante le pare-brise du véhicule).

Un example ne faisant pas partie de l'invention concerne également un véhicule automobile comprenant un afficheur tête haute selon l'une des revendications précédentes.

### DESCRIPTION DETAILLEE D'UN EXEMPLE DE REALISATION

La description qui va suivre en regard des dessins annexés, donné à titre d'exemples non limitatif, fera bien comprendre en quoi consiste l'invention et comment elle peut être réalisée :
- la figure 1 représente une coupe longitudinale schématique d'un premier exemple de réalisation d'un afficheur tête haute selon l'invention, en position dans un véhicule automobile partiellement illustré ;
- la figure 2 représente une coupe longitudinale schématique d'un deuxième exemple de réalisation d'un afficheur tête haute selon l'invention ;
- la figure 3 représente une coupe longitudinale schématique d'un troisième exemple de réalisation d'un afficheur tête haute selon l'invention.

Pour rappel, la présente invention propose un afficheur tête haute pour véhicule automobile moins encombrant et permettant un meilleur refroidissement de son écran.

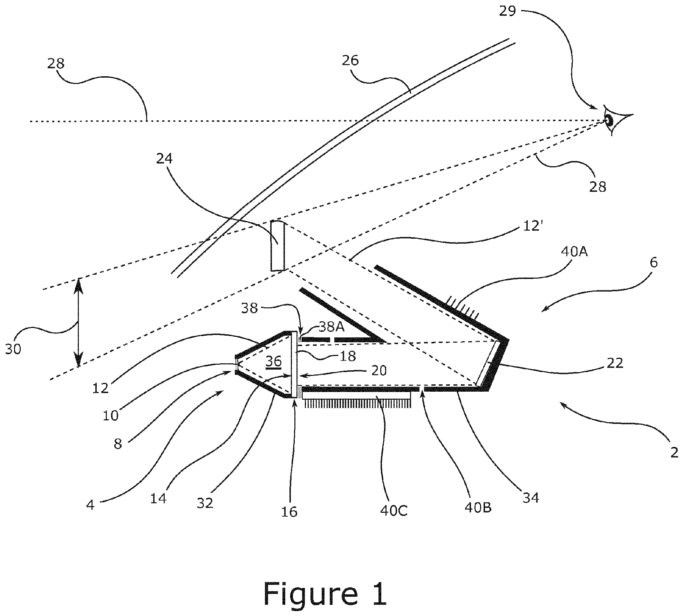

La figure 1 présente un premier mode de réalisation d'un afficheur 2 tête haute selon l'invention. L'afficheur 2 comprend un dispositif de génération d'images 4 et un dispositif de projection 6 desdites images.

Le dispositif de génération d'images 4 comporte une source de lumière 8 comprenant au moins une diode électroluminescente 10 (ou LED pour « Light Emitting Diode »). À titre d'exemple, les LEDs peuvent être agencées selon une ou plusieurs rangées. La source de lumière 8 est agencée de sorte à émettre un faisceau lumineux 12 éclairant une face avant 14 d'un écran 16.

L'écran est composé d'une matrice 18 constituée d'éléments dont la transmittance varie de façon contrôlée dans le temps, entre la face avant 14 et une face arrière 20 de l'écran. La transmittance de la matrice 18 est contrôlée par un dispositif non représenté sur les figures pour plus de clarté. La transmittance de chaque élément est contrôlée indépendamment, afin de modifier localement et au cours du temps, l'opacité de l'écran 16. Le faisceau lumineux 12' émergeant de la face arrière 20 de l'écran, forme ainsi un faisceau lumineux pixélisé dont le motif et l'intensité peuvent être modifiés en fonction de l'information que l'on souhaite communiquer au conducteur du véhicule. À titre d'exemple non limitatif, une matrice 18 peut comprendre un écran à cristaux liquides (ou LCD pour "Liquid Crystal Display"), par exemple à transistors en couche mince (ou TFT pour "Thin-Film Transistor"). Il est à noter qu'usuellement, du fait de sa conception (utilisant un polariseur d'entrée au niveau de la face avant 14 et un polariseur de sortie au niveau de sa face arrière 20) ce type de matrice 18 absorbe majoritairement le faisceau lumineux 12 au niveau de la face arrière 20 de l'écran (en particulier lorsque l'image affichée comporte une majorité de pixels sombres, ce qui est fréquemment le cas).

Le dispositif de projection 6 mentionné ci-dessus, comprend une surface de réflexion 22 afin de diriger le faisceau lumineux 12' en direction d'une lame 24 partiellement transparente. De façon avantageuse, la lame 24 est placée entre un pare-brise 26 du véhicule automobile et les yeux 29 du conducteur, partiellement représentés sur les figures afin de faciliter la compréhension de l'invention. La lame 24 est agencée de sorte à être présente dans le champ de vision 28 du conducteur en situation de conduite. La lame 24 est partiellement transparente afin de ne pas occulter une partie du champ de vision 28 du conducteur, tout en permettant l'affichage dans la direction de la lame 24 d'une information lumineuse que le conducteur voit sous la forme d'une image virtuelle 30. Selon un mode de réalisation alternatif non illustré, la lame partiellement transparente peut être confondue avec le pare-brise. Autrement dit, le pare-brise peut jouer le rôle de la lame partiellement transparente.

Afin d'optimiser l'intensité du faisceau lumineux 12 éclairant l'écran 16, un conduit optique avant 32 (formant éventuellement réflecteur) est interposé entre la source de lumière 8 et la face avant 14 dudit écran. Le conduit optique avant 32 permet également d'empêcher les fuites lumineuses du faisceau lumineux 12. Pour les mêmes raisons (ainsi que pour des raisons esthétiques), un conduit optique arrière 34 est également placé sur le trajet du faisceau lumineux 12' entre la face arrière 20 de l'écran et la lame 24, en particulier ici entre la face arrière 20 de l'écran 16 et la surface de réflexion 22.

Comme mentionné ci-dessus, le conduit optique avant 32 délimite un espace clos 36 entre la source de lumière 8 et l'écran 16, dans lequel la chaleur générée par l'écran 16 et par la source de lumière 8 se dissipe. Afin de limiter une accumulation de chaleur dans le conduit optique avant 32, la présente invention propose de favoriser une dissipation de la chaleur émise par l'écran 16 à travers le conduit optique arrière 34.

Pour cela, comme illustré par la figure 1, un collecteur de chaleur 38 est employé pour relier thermiquement la face arrière 20 de l'écran au conduit optique arrière 34. Selon le présent exemple, le collecteur de chaleur 38 est composé d'un élément intermédiaire 38A, interposée entre la face arrière 20 de l'écran 16 et le conduit optique arrière 34. L'élément intermédiaire 38A se caractérise par une conductivité thermique égale ou supérieure à la conductivité thermique de l'écran 16. On entend par là que la conductivité thermique de l'élément intermédiaire 38A est égale ou supérieure à la conductivité thermique de la surface de l'écran en contact avec l' élément intermédiaire. De préférence, la conductivité thermique de l' élément intermédiaire 38A est égale ou supérieure à 0,5 W.m⁻¹.K⁻¹, de préférence supérieure à 5 W.m⁻¹.K⁻¹ (voire supérieure à 15 W.m⁻¹.K⁻¹). L'élément intermédiaire 38A peut être une colle ou une pâte thermique. Selon le présent exemple, l'élément intermédiaire 38A est une mousse conductrice thermique, commercialisée par la société SEKISUI CHEMICAL CO., LTD. sous la référence « XLIM - CL», constituée d'un élastomère polyoléfin constituant le substrat d'un mélange de bulles d'air et d'éléments conducteurs thermiques à bases de céramiques. L'épaisseur de l'élément intermédiaire 38A est de préférence supérieure à 0,1 mm.

Il est à noter que le collecteur de chaleur 38 est relié thermiquement avec le conduit optique arrière 34, de manière à favoriser une dissipation de plus de 50% de la chaleur produite par l'écran, au niveau des parois dudit conduit optique. Cet agencement est nettement plus avantageux par rapport à l'état de la technique décrit ci-dessus, car le conduit optique arrière 34 n'est pas situé entre les deux principales sources de chaleur de l'afficheur 2, contrairement au conduit optique avant 32. En d'autres termes, le conduit optique arrière 34 est moins chaud que le conduit optique avant 32, il forme ainsi un dissipateur thermique nettement plus intéressant que le conduit optique avant 32. Dans ce but, le conduit optique arrière peut comprendre une ou plusieurs ailettes 40A de refroidissement et/ou un ou plusieurs passages 40B favorisant la circulation de l'air de l'intérieur vers l'extérieur du conduit optique arrière.

Comme illustré par la figure 1, selon l'invention au moins une partie de l' élément intermédiaire 38A est reliée thermiquement à un radiateur thermique 40C, s'étendant le long du conduit optique arrière 34. De façon avantageuse, l'invention permet de ne plus encombrer l'espace autour du conduit optique avant 32 avec un radiateur thermique, favorisant ainsi par la même occasion un meilleur refroidissement du conduit optique avant. Éventuellement, le radiateur thermique 40C peut être couplé avec un moyen de refroidissement actif du type ventilateur ou un élément mettant en œuvre l'effet Peltier, non représenté sur la figure 1.

Le conduit optique arrière 34 est constitué d'une matière naturellement conductrice de chaleur comme un thermoplastique. On privilégie un thermoplastique dont la conductivité thermique est au moins égale à celle de l' élément intermédiaire 38A (c'est-à-dire dont la conductivité thermique est ici supérieure à 0,5 W.m⁻¹.K⁻¹). À titre d'exemple non limitatif, on peut opter pour un thermoplastique commercialisé par la société CELANESE, sous la référence « COOL POLY » de type polyamide 6 (PA6). Le conduit optique arrière 34 étant d'une taille (et donc d'un volume) notable (par rapport notamment à l'écran 16), il peut absorber une partie importante de la chaleur générée par l'écran 36. Il est à noter que le conduit optique avant 32 peut également comprendre une ou plusieurs ailettes de refroidissement et/ou un ou plusieurs passages favorisant la circulation de l'air de l'intérieur vers l'extérieur du conduit optique avant (non représentés sur les figures).

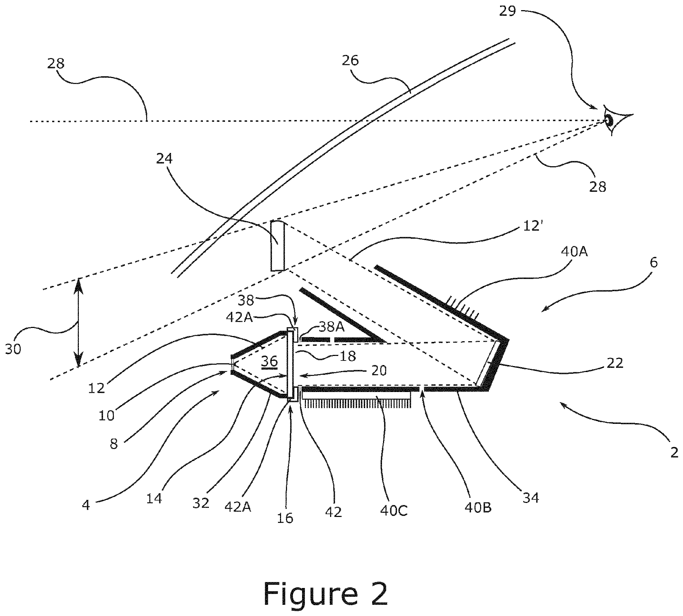

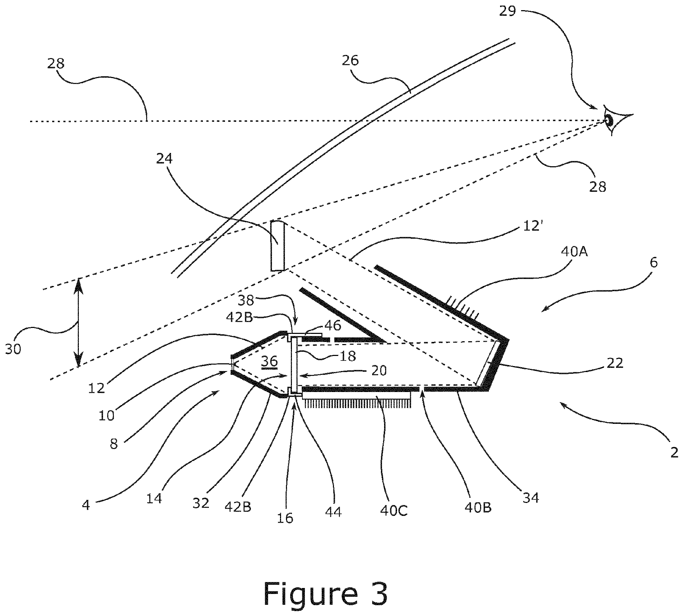

Les figures 2 et 3 illustrent à présent des modes différents de réalisation de l'invention. Les éléments communs entre ces différents modes, sont indexés ci-après par les mêmes numéros de référence et ne seront pas décrits à nouveau.

Selon un deuxième mode de réalisation de l'invention, illustré par la figure 2, l'écran 16 comporte sur sa face arrière 20, un collecteur de chaleur 38 comprenant un premier cadre métallique 42A. Ce premier cadre métallique 42A entoure la matrice 18 de manière à permettre le passage du faisceau lumineux 12. Le premier cadre métallique 42A est relié thermiquement au conduit optique arrière 34 par un élément intermédiaire 38A décrit ci-dessus. De façon avantageuse, la présence du premier cadre métallique 42A permet une plus grande surface de contact thermique avec l'écran 16, afin de favoriser un flux de chaleur thermique plus important de l'écran vers le conduit optique arrière 34. Le premier cadre métallique 42A peut être composé d'aluminium ou d'acier inoxydable. Pour une efficacité similaire par rapport au premier mode de réalisation décrit ci-dessus, le conduit optique arrière 34 peut être réalisé avec des matériaux dont la conductivité thermique est moins importante. Ce deuxième mode de réalisation est donc plus économique que le premier mode de réalisation. Il est à noter que l'élément intermédiaire 38A peut également être agencé de sorte à former une couche 42, reliant thermiquement le premier cadre métallique 42A à un radiateur thermique 40C, s'étendant le long du conduit optique arrière 34.

Selon un troisième mode de réalisation de l'invention illustré par la figure 3, le collecteur de chaleur 38 comprend un deuxième cadre métallique 42B, au contact de la face avant 14 de l'écran 16. Ce deuxième cadre métallique 42B entoure la matrice 18, de manière à permettre au faisceau lumineux 12 émis par la source de lumière 8, d'éclairer au moins une partie de la matrice 18. Le deuxième cadre métallique 42B comporte des bords latéraux 44 s'étendant de chaque côté de l'écran 16. Les extrémités 46 des bords latéraux 44 entourent l'extrémité du conduit optique arrière 34 et sont en contact avec sa surface extérieure afin de permettre un transfert de chaleur optimal entre l'écran 16 et ledit conduit optique arrière 34. Selon une variante non représentée, un élément intermédiaire peut être interposée entre les bords latéraux 44 et le conduit optique arrière 34 afin d'optimiser le transfert de chaleur. Cet élément intermédiaire peut être de nature identique ou similaire à l'élément intermédiaire 38A décrite ci-dessus. Il est à noter qu'aucun élément intermédiaire 38A n'est plus nécessaire entre la face arrière 20 de l'écran 16 et le conduit optique 38, le deuxième cadre métallique 42B jouant le rôle du collecteur de chaleur 38. Toutefois, il est possible de combiner le deuxième et le troisième modes de réalisation décrits ci-dessus pour obtenir un transfert de chaleur plus efficient de l'écran 16 vers le conduit optique arrière 34. Il est à noter qu'un bord latéral 44 du deuxième cadre métallique peut être agencé de sorte à être en contact avec un radiateur thermique 40C, s'étendant le long du conduit optique arrière 34.

Dans les exemples décrits ci-dessus, on privilégie un contact étroit entre d'une part, le collecteur de chaleur et l'écran et d'autre part, entre le collecteur de chaleur et le conduit optique arrière. Pour cela, on peut employer des moyens de maintien de type colle thermique, vis ou autres. Selon une autre alternative, on peut opter pour maintenir mécaniquement le collecteur de chaleur au contact de l'écran, en appliquant une contrainte mécanique sur le collecteur de chaleur par l'intermédiaire du conduit optique avant et/ou du conduit optique arrière.

En conclusion, l'invention favorise une dissipation de la chaleur de l'écran 16 au niveau de sa face arrière 20, et non plus au niveau de sa face avant 14. Cette configuration est particulièrement avantageuse, car la face arrière de l'écran 16 est généralement la face la plus chaude du fait que (comme expliqué plus haut) la matrice 18 absorbe majoritairement le faisceau lumineux 12 au niveau de la face arrière 20 dudit écran et qu'en outre la face arrière 20 peut également être soumise à un échauffement du fait de rayonnements lumineux extérieurs (généralement solaires) pénétrant dans le conduit optique arrière 34. De plus, le collecteur de chaleur 38 favorise la dissipation de la chaleur de l'écran dans une zone éloignée de la source de lumière, afin d'éviter une élévation critique de la température dans le conduit optique avant 32. Selon un autre avantage, le collecteur de chaleur 38 est en contact thermique avec le conduit optique arrière 34. Or, le conduit optique arrière 34 est plus éloigné de la source de lumière 8 que le conduit optique avant 32, favorisant un meilleur refroidissement de l'écran 16 à travers le conduit optique arrière 34 qu'à travers le conduit optique avant 32.

## Revendications

1. Afficheur (2) tête haute pour véhicule automobile, comprenant :
- un écran (16) composé d'une matrice (18) constituée d'éléments dont la transmittance varie de façon contrôlée dans le temps, entre une face avant (14) et une face arrière (20) de l'écran ;
- une source de lumière (8) éclairant la face avant (14) de l'écran (16) avec un faisceau lumineux (12); et
- un conduit optique arrière (34) agencé en vis-à-vis de la face arrière (20) de l'écran (16), afin qu'un faisceau lumineux (12') émis par l'écran (16) passe à travers le conduit optique arrière (34) ; l'afficheur (2) tête haute comprend un collecteur de chaleur (38, 38A, 42B) reliant thermiquement l'écran (16) au conduit optique arrière (34), de sorte à favoriser un transfert de chaleur de l'écran (16) vers le conduit optique arrière (34), et le collecteur de chaleur (38) comprend un élément intermédiaire (38A) interposé entre la face arrière (20) de l'écran (16) et le conduit optique arrière (34), **caractérisé en ce que** l'élément intermédiaire (38A) est relié thermiquement à un radiateur thermique (40C) s'étendant le long du conduit optique arrière (34).

2. Afficheur tête haute selon la revendication 1, comprenant un conduit optique avant (32) interposé entre la source de lumière (8) et la face avant (14) de l'écran (16).

3. Afficheur (2) tête haute selon la revendication précédente, **caractérisé en ce que** le collecteur de chaleur (38, 38A, 42B) est agencé de sorte à permettre une plus grande transmission de la chaleur produite par l'écran (16) au niveau du conduit optique arrière (34) qu'au conduit optique avant (32).

4. Afficheur (2) tête haute selon la revendication 2 ou 3, **caractérisé en ce que** le collecteur de chaleur (38, 38A, 42B) a une conductivité thermique égale ou supérieure à la conductivité thermique du conduit optique avant (32).

5. Afficheur (2) tête haute selon l'une des revendications précédentes, **caractérisé en ce que** le collecteur de chaleur (38, 38A, 42B) a une conductivité thermique égale ou supérieure à la conductivité thermique de l'écran (16).

6. Afficheur (2) tête haute selon l'une des revendications précédentes, **caractérisé en ce que** le collecteur de chaleur (38, 38A, 42B) a une conductivité thermique égale ou supérieure à 0,5 W.m-¹.K-¹.

7. Afficheur (2) tête haute selon l'une des revendications précédentes, **caractérisé en ce que** l'écran (16) comporte sur sa face arrière (20), un premier cadre métallique (42A) entourant la matrice (18), le collecteur de chaleur (38A) reliant le premier cadre métallique (42A) au conduit optique arrière (34).

8. Afficheur (2) tête haute selon l'une des revendications précédentes, **caractérisé en ce que** le collecteur de chaleur (34) comprend un deuxième cadre métallique (42B) entourant la matrice (18) au niveau de la face avant (14) de l'écran, le deuxième cadre métallique (42B) comprenant au moins un bord latéral (44) lié thermiquement avec le conduit optique arrière (34).

9. Afficheur (2) tête haute selon la revendication 8, **caractérisé en ce qu'**au moins un bord latéral (44) du deuxième cadre métallique (42B) s'étend le long du conduit optique arrière (34).

10. Afficheur (2) tête haute selon la revendication 8, **caractérisé en ce qu'**au moins un bord latéral (44) du deuxième cadre métallique (42B) est situé à l'extérieur du conduit optique arrière (34).

11. Afficheur (2) tête haute selon la revendication 8, **caractérisé en ce qu'**un bord latéral (44) du deuxième cadre métallique (42B) est agencé de sorte à être en contact avec le radiateur thermique (40C).

12. Afficheur (2) tête haute selon l'une des revendications 1 à 11, comprenant un dispositif de projection du faisceau lumineux en direction d'une lame partiellement transparente.

## Patentansprüche

1. Head-up-Display (2) für ein Kraftfahrzeug, umfassend:
- einen Schirm (16), der aus einer Matrix (18) zusammengesetzt ist, die aus Elementen besteht, deren Transmissionsgrad im Laufe der Zeit kontrolliert variiert, zwischen einer Vorderseite (14) und einer Rückseite (20) des Schirms;
- eine Lichtquelle (8), welche die Vorderseite (14) des Schirms (16) mit einem Lichtstrahl (12) beleuchtet; und
- eine hintere optische Leitung (34), die gegenüber der Rückseite (20) des Schirms (16) angeordnet ist, damit ein von dem Schirm (16) emittierter Lichtstrahl (12') durch die hintere optische Leitung (34) hindurch verläuft;
das Head-up-Display (2) umfasst einen Wärmekollektor (38, 38A, 42B), der den Schirm (16) thermisch mit der hinteren optischen Leitung (34) verbindet, so dass ein Wärmeübergang von dem Schirm (16) zu der hinteren optischen Leitung (34) begünstigt wird, und der Wärmekollektor (38) umfasst ein Zwischenelement (38A), das zwischen die Rückseite (20) des Schirms (16) und die hintere optische Leitung (34) gesetzt ist, **dadurch gekennzeichnet, dass** das Zwischenelement (38A) thermisch mit einem thermischen Strahler (40C) verbunden ist, der sich entlang der hinteren optischen Leitung (34) erstreckt.

2. Head-up-Display nach Anspruch 1, umfassend eine vordere optische Leitung (32), die zwischen die Lichtquelle (8) und die Vorderseite (14) des Schirms (16) gesetzt ist.

3. Head-up-Display (2) nach dem vorhergehenden Anspruch, **dadurch gekennzeichnet, dass** der Wärmekollektor (38, 38A, 42B) so angeordnet ist, dass eine stärkere Übertragung der von dem Schirm (16) erzeugten Wärme an der hinteren optischen Leitung (34) als an der vorderen optischen Leitung (32) ermöglicht wird.

4. Head-up-Display (2) nach Anspruch 2 oder 3, **dadurch gekennzeichnet, dass** der Wärmekollektor (38, 38A, 42B) eine thermische Leitfähigkeit hat, die größer oder gleich der thermischen Leitfähigkeit der vorderen optischen Leitung (32) ist.

5. Head-up-Display (2) nach einem der vorhergehenden Ansprüche, **dadurch gekennzeichnet, dass** der Wärmekollektor (38, 38A, 42B) eine thermische Leitfähigkeit hat, die größer oder gleich der thermischen Leitfähigkeit des Schirms (16) ist.

6. Head-up-Display (2) nach einem der vorhergehenden Ansprüche, **dadurch gekennzeichnet, dass** der Wärmekollektor (38, 38A, 42B) eine thermische Leitfähigkeit hat, die größer oder gleich 0,5 W.m⁻¹.K⁻¹ ist.

7. Head-up-Display (2) nach einem der vorhergehenden Ansprüche, **dadurch gekennzeichnet, dass** der Schirm (16) auf seiner Rückseite (20) einen ersten Metallrahmen (42A) beinhaltet, der die Matrix (18) umgibt, wobei der Wärmekollektor (38A) den ersten Metallrahmen (42A) mit der hinteren optischen Leitung (34) verbindet.

8. Head-up-Display (2) nach einem der vorhergehenden Ansprüche, **dadurch gekennzeichnet, dass** der Wärmekollektor (34) einen zweiten Metallrahmen (42B) umfasst, der die Matrix (18) an der Vorderseite (14) des Schirms umgibt, wobei der zweite Metallrahmen (42B) mindestens einen seitlichen Rand (44) umfasst, der thermisch mit der hinteren optischen Leitung (34) verbunden ist.

9. Head-up-Display (2) nach Anspruch 8, **dadurch gekennzeichnet, dass** sich mindestens ein seitlicher Rand (44) des zweiten Metallrahmens (42B) entlang der hinteren optischen Leitung (34) erstreckt.

10. Head-up-Display (2) nach Anspruch 8, **dadurch gekennzeichnet, dass** mindestens ein seitlicher Rand (44) des zweiten Metallrahmens (42B) außerhalb der hinteren optischen Leitung (34) gelegen ist.

11. Head-up-Display (2) nach Anspruch 8, **dadurch gekennzeichnet, dass** ein seitlicher Rand (44) des zweiten Metallrahmens (42B) so angeordnet ist, dass er in Kontakt mit dem thermischen Strahler (40C) ist.

12. Head-up-Display (2) nach einem der Ansprüche 1 bis 11, umfassend eine Vorrichtung zur Projektion des Lichtstrahls in Richtung einer teilweise transparenten Scheibe.

## Claims

1. Head-up motor-vehicle display (2) comprising:
- a screen (16) composed of an array (18) of elements the transmittance of which varies in a controlled manner over time, between a front side (14) and a back side (20) of the screen;
- a light source (8) illuminating the front side (14) of the screen (16) with a light beam (12); and
- a rear light pipe (34) arranged facing the back side (20) of the screen (16), so that a light beam (12') emitted by the screen (16) passes through the rear light pipe (34);
the head-up display (2) comprises a heat collector (38, 38A, 42B) thermally connecting the screen (16) to the rear light pipe (34), so as to promote heat transfer from the screen (16) to the rear light pipe (34), and the heat collector (38) comprises an intermediate element (38A) interposed between the back side (20) of the screen (16) and the rear light pipe (34), **characterized in that** the intermediate element (38A) is thermally connected to a thermal radiator (40C) extending along the rear light pipe (34).

2. Head-up display according to Claim 1, comprising a front light pipe (32) interposed between the light source (8) and the front side (14) of the screen (16).

3. Head-up display (2) according to the preceding claim, **characterized in that** the heat collector (38, 38A, 42B) is arranged so as to allow greater transmission of the heat produced by the screen (16) to the rear light pipe (34) than to the front light pipe (32).

4. Head-up display (2) according to Claim 2 or 3, **characterized in that** the heat collector (38, 38A, 42B) has a thermal conductivity equal to or greater than the thermal conductivity of the front light pipe (32).

5. Head-up display (2) according to any of the preceding claims, **characterized in that** the heat collector (38, 38A, 42B) has a thermal conductivity equal to or greater than the thermal conductivity of the screen (16).

6. Head-up display (2) according to any of the preceding claims, **characterized in that** the heat collector (38, 38A, 42B) has a thermal conductivity equal to or greater than 0.5 W.m⁻¹.K⁻¹.

7. Head-up display (2) according to any of the preceding claims, **characterized in that** the screen (16) comprises, on its back side (20), a first metal frame (42A) encircling the array (18), the heat collector (38A) connecting the first metal frame (42A) to the rear light pipe (34).

8. Head-up display (2) according to any of the preceding claims, **characterized in that** the heat collector (34) comprises a second metal frame (42B) encircling the array (18) on the front side (14) of the screen, the second metal frame (42B) having at least one lateral edge (44) thermally connected to the rear light pipe (34).

9. Head-up display (2) according to Claim 8, **characterized in that** at least one lateral edge (44) of the second metal frame (42B) extends along the rear light pipe (34).

10. Head-up display (2) according to Claim 8, **characterized in that** at least one lateral edge (44) of the second metal frame (42B) is located outside the rear light pipe (34).

11. Head-up display (2) according to Claim 8, **characterized in that** a lateral edge (44) of the second metal frame (42B) is arranged so as to make contact with the thermal radiator (40C).

12. Head-up display (2) according to any of Claims 1 to 11, comprising a device for projecting the light beam toward a partially transparent plate.
